# EUROPEAN PATENT SPECIFICATION

(11) **EP 1 533 255 B1**
(45) Date of publication and mention of the grant of the patent: **26.07.2006**
(21) Application number: 04007352.0
(22) Date of filing: 26.03.2004
(51) Int. Cl.: B65G 15/58

(54) **Vacuum belt conveyor for plates**
Unterdruck-Bandförderer für plattenartige Teile
Convoyeur à bande avec aspiration pour éléments en forme de plaque

(30) Priority: 21.11.2003 IT TO20030927
(43) Date of publication of application: 25.05.2005
(73) Proprietor: Forvet S.r.l., 10040 Volvera (IT)
(72) Inventor: Gariglio, Davide, 10045 Piossasco (TO) (IT)
(74) Representative: Garavelli, Paolo

(56) References cited:
- DE-A1- 10 008 831
- GB-A- 2 390 072
- US-A- 3 389 908
- US-A- 3 889 801
- US-A- 5 648 140
- US-B1- 6 216 848

## Description

The present invention refers to a vacuum conveyor for plates, particularly for glass plates. Such conveyor is particularly adapted to be used in industries and with machinery for working glass.

In such industries, glass plates having different sizes, shapes and thicknesses are subjected to side grinding, and drilling and grinding workings along any direction that is parallel or not with respect to the advancement direction of the plates.

For every type of working that provides for a removal of material or equivalent workings, the currently-used machinery comprise belt conveyors, operating in a position that is substantially horizontal, vertical or slanted with respect to the ground, on which the plates are placed and dragged due to the friction between plate itself and material (usually special rubber) of which the belts are composed. Given the high efforts to which the plates are subjected during their working, it is necessary that they are further unmovably held in position on the belts: for such purpose, currently pressing means are provided, that are preferably composed of a plurality of rollers around which rubber rings or rubber tracks are placed, that press against the plates themselves from above, namely from the plate side that is opposite to the one resting onto the conveyor belts.

Even if rubber rollers and rings are provided in order to keep the surface in contact with glass as small as possible, however, in order to carry out some pressure, it is anyway necessary to provide a series of contact points that almost always create glass scoring problems, since the glass, when working, is covered by rather abrading dust and glass chips. Moreover, with the evolution of the glass product, nowadays plates are provided that are equipped with an upper film that is nicked and ruined by the contact with pressing means (so-called "LOW-E" - "low emission" glasses)

US-A-3389908 discloses a device for transferring flat or sheet products according to the pre-characterising part of Claim 1.

US-A-5648140 discloses a conveyor for continuous vacuum lamination according to the pre-characterising part of Claim 1.

Object of the present invention is solving the above prior-art problems, by providing a belt conveyor that does not need any more any type of pressing means and that exerts onto the moving plates a force that is equal to, if not greater than the holding force so far provided by the pressing means, in order to allow working the plates along any direction with respect to their moving direction.

A further object of the present invention is providing a belt of the above-mentioned type that is of simple construction, high reliability, is not subjected to problems deriving from the difficult working environment in which it will have to operate, and allows providing an holding force onto the plates with high efficiency (up to 80% or more), but also when its holding efficiency is much smaller (down to 40%).

The above and other objects and advantages of the invention, as will appear from the following description, are obtained by a belt conveyor as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a perspective view of an embodiment of the belt conveyor of the present invention, in one of its operating positions;
- Figure 2 is a bottom perspective view of the conveyor in Fig. 1;
- Figure 3 is a perspective view of the belt conveyor of Fig. 1, in another of its operating positions;
- Figure 4 is a bottom perspective view of the conveyor in Fig. 3;
- Figure 5 is an exploded perspective view of the three main components of the belt conveyor of the present invention;
- Figure 6 is a partial top perspective view of the conveyor belt of the present invention;
- Figure 7 is a partial top view of the belt in Fig. 6;
- Figure 8 is a side sectional view of the belt in Fig. 6;
- Figure 9 is a partial bottom perspective view of the belt in Fig. 6;
- Figure 10 is a perspective view showing the inside of the supporting means in Fig. 5;
- Figure 11 is a perspective view that shows the inside of the guiding means in Fig. 5; and
- Figure 12 is a detailed view of a moving and cleaning arrangement for the conveyor belt of the present invention.

With reference to the Figures, a preferred embodiment of the belt conveyor of the present invention is shown and described, referred to the field of transporting glass plates (with any shape, size and thickness). It will be immediately obvious to the skilled people in the art that numerous variations and modifications (for example related to shape, sizes and parts with equivalent functionalities) could be made to the described conveyor without departing from the scope of the invention as claimed in the enclosed Claims.

With reference to the Figures, a preferred embodiment of the belt conveyor 1 of the present invention is shown, applied (in a non-limiting way) to the transport of glass plates 2 having various sizes.

Such conveyor 1 operates using the vacuum obtained through common circuits and, for example, a liquid loop pump or a multi-stage ejector pump: such circuits (and other ones equivalent thereto) are known in the art and will not be described in detail herein below. Suffice it to say that the vacuum realised by such circuits (with a reduced cost and that can be easily realised and applied to the conveyor of the invention) is enough high to guarantee an unmovable holding of the plates 2 during their transport and their working, and such holding is much higher than the one currently obtained by the top holding means that have the above-mentioned problems.

Moreover, the vacuum circuit applied to the invention can reach efficiencies that are equal to 80% or more (in spite of the fact that the belt conveyor components are not mutually connected with high seals), but a low efficiency even down to 40% is enough to guarantee an holding force onto the plates 2 that is more than enough to transport and work them. This allows applying the vacuum only to part of the conveyor 1 when moving the plates 2, in a progressive way according to the advancement of the plates 2 themselves, without worrying that the vacuum leakages, due to the application of vacuum to a part of the conveyor 1 where the plate 2 has still not passed, or to a part of the conveyor 1 where the plate 2 has already passed, reduce the final holding efficiency of the conveyor itself.

The inventive conveyor 1 is realised in order to exert, when the plates 2 are worked along any direction with respect to their advancement direction, an holding force onto the plates 2 themselves that operates only on one of the major surfaces of the plates 2 that is not subjected to working, thereby avoiding to damage the moste delicate surface ("LOW-E") of the plates 2 in contact with working scraps.

The conveyor 1, as shown in the Figures, substantially comprises:
- at least one belt 3 equipped with at least one suction recess 4 comprising at least one through-hole 4';
- supporting means 5 of the at least one holed belt 3, in which such supporting means 5 comprise at least one vacuum chamber 7; and
- guiding means 9 of the at least one holed belt 3, in which such guiding means 9 are placed between the belt 3 and the supporting means 5 in order to close the at least one vacuum chamber 7, and in which such guiding means 9 are equipped with at least one opening 11 adapted to externally open the at least one vacuum chamber 7 since it is placed next to the chamber 7 itself.

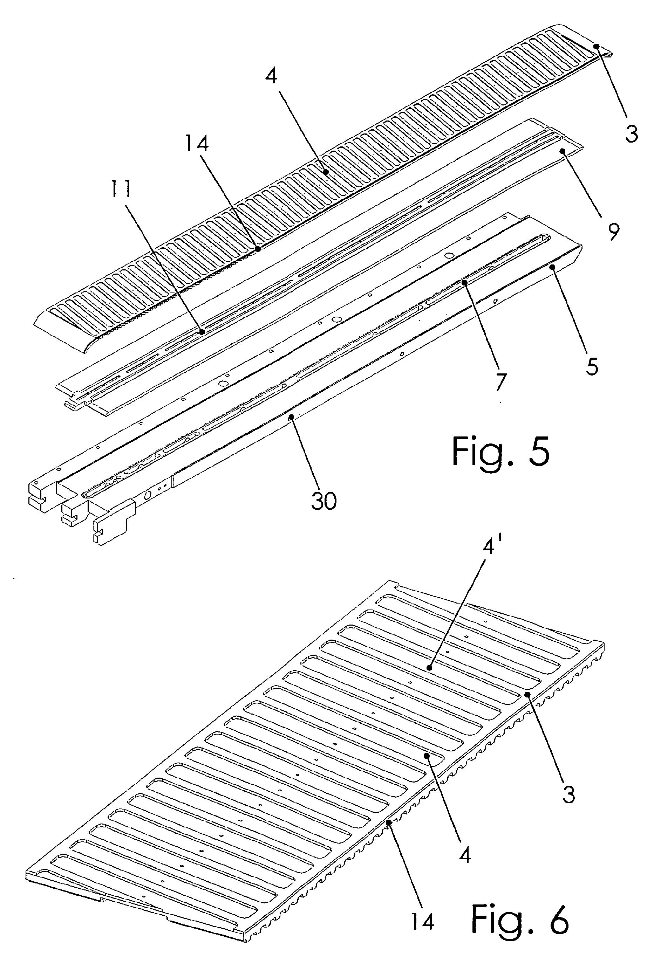

As can be seen in Fig. 5, the guiding means 9 can be made separately from the supporting means 5 and are joined thereto through securing means (not shown). Even if this is the preferred embodiment, the guiding means 9 can be made integrally with the supporting means 5.

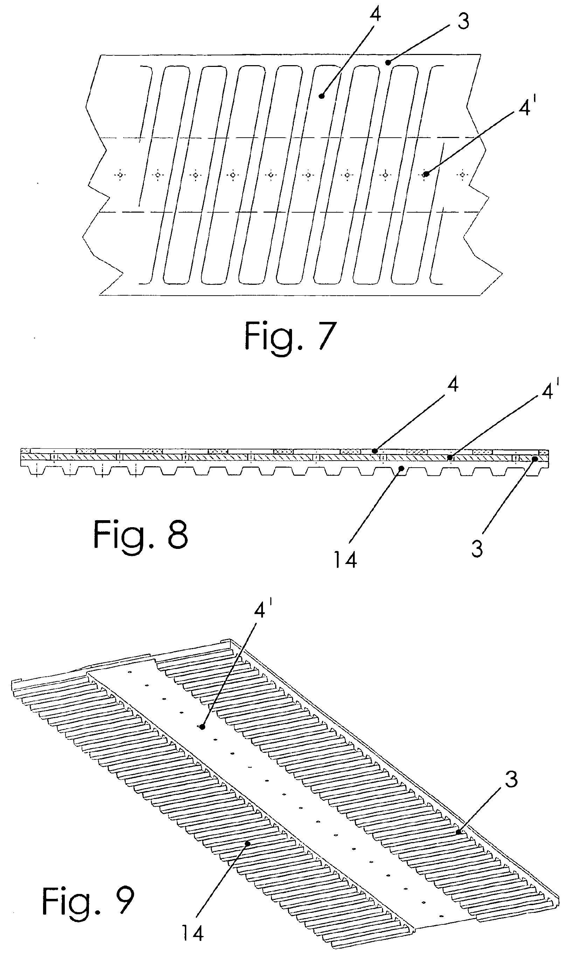

In order to perform the best holding onto the plates 2, the belt 3 (as shown in Fig. 6 to 9) is equipped with a plurality of suction recesses 4 with respective holes 4' that are obtained along its whole longitudinal extension: in this way, by applying vacuum to the conveyor, the suction recesses 4 will create a sort of suction chambers that will progressively operate onto the plate 2, that covers them when passing above them (also guaranteeing a certain airtightness for them), and that will be disabled (by progressively removing vacuum therefrom in a known way, through suitable adjustments supplied, for example, by an encoder that detects the movement of the plates 2) as soon as a plate 2 has passed them when moving forward. The suction recesses 4 are realised (Fig. 6 and 7) in an elongated and slanted way with respect to the longitudinal axis of the belt 3 in order to guarantee a continuous but progressive holding onto the plates 2 and in order to reduce the wear problems onto the belt 3, providing recesses 4 that progressively work onto the plates 2 themselves.

In a corresponding way to the above-described one, when the belts 3 are realised with a plurality of recesses 4, also the supporting means 5 are equipped with a plurality of vacuum chambers 7 and the guiding means 9 are equipped with a plurality of respective openings 11 each one corresponding to one of the vacuum chambers 7. Such chambers 7, supplied by correspondinig holes 30 connected to the upstream and downstream vacuum circuit, allow being progressively activated and deactivated (by respectively applying and removing vacuum to and from them) according to the advancement of the plates 2 over the chambers 7.

While the general vacuum circuit is preferably driven by a solenoid valve (not shown) that activates the vacuum itself, every chamber 7 is preferably equipped with a membrane valve (not shown because it is known in the art) driven by another solenoid valve in order to create vacuum in or remove vacuum from the chamber 7.

In order to allow its handling, the belt 3 is equipped with a plurality of dragging teeth 14 adapted to engage respective dragging grooves 16 of toothed wheels 18 for moving the conveyor 1 around the wheels 18 and corresponding idle rollers 18'.

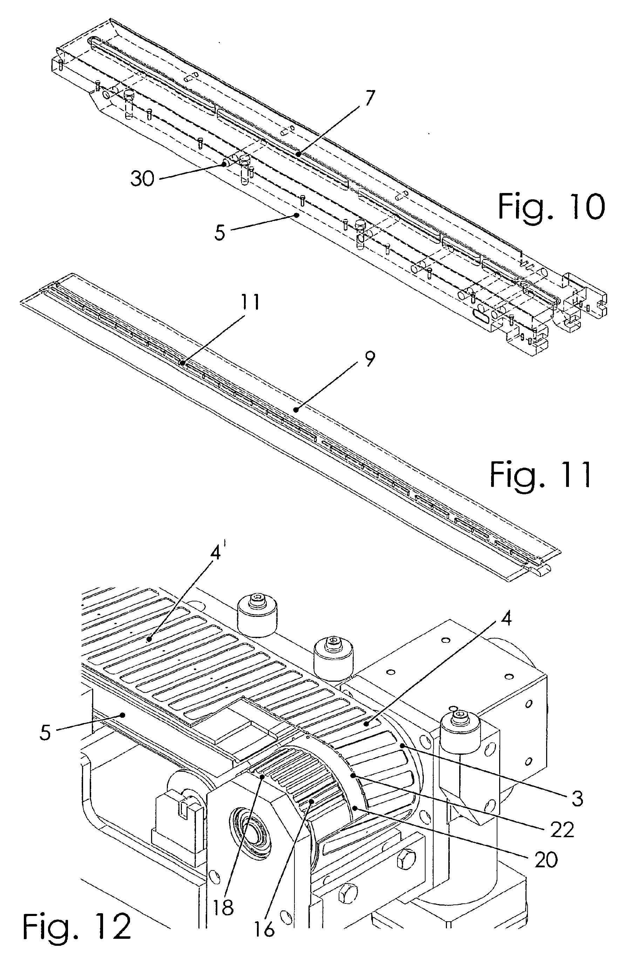

Moreover, since, after a prolonged use, glass dust and other impurities are sucked inside the holes 4' of the belt 3, the conveyor 1 is equipped with at least one wheel 20 (Fig. 12) around which the belts 3 rotate, in which such wheel 20 is equipped with a plurality of projecting pins 22 adapted to engage and penetrate into the respective holes 4' of the belt 3 in order to clean them and detach therefrom possible foreign substances contained therein upon every complete rotation of the belt 3.

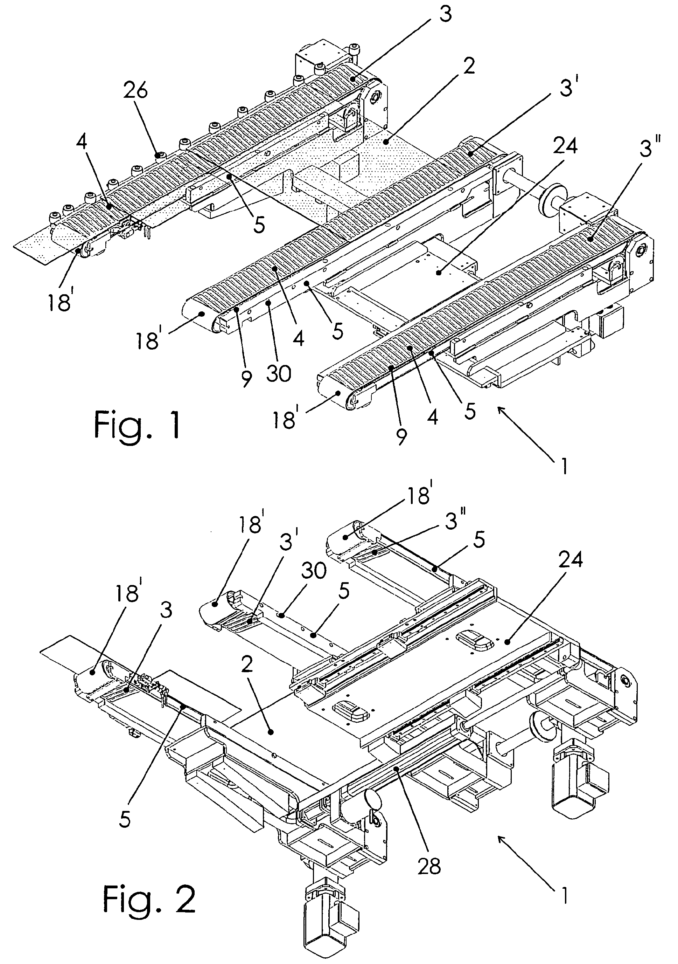

The inventive conveyor 1 is so flexible as to be realised in various versions and configurations, that are able to be mutually coupled and uncoupled, in order to allow moving and working plates having different shapes and sizes, even simultaneously on the same line. Figures 1 to 4 show one of these construction variations, in which three belt conveyors 3, 3', 3" are provided that are mutually connected and cooperating. A first belt 3 is fixed and is equipped with a plurality of bearing and working-reference rollers 26, while a pair of belts 3', 3" are provided that are placed on a support 24 that is movable with respect to the fixed belt 3 along a transverse direction with respect to the advancement direction of the plates 2. In this way, the distance between the fixed belt 3 and the two movable belts 3', 3" can be adjusted, in order to keep it variable to realise the support and holding of plates 2 with any transverse size. Moreover, these two movable belts 3', 3'', once having been placed with respect to the fixed belt 3, are adapted to be simultaneously or alternatively activated to provide a higher or lower grip onto the plates 2, to complete the operating flexibility of the inventive conveyor 1.

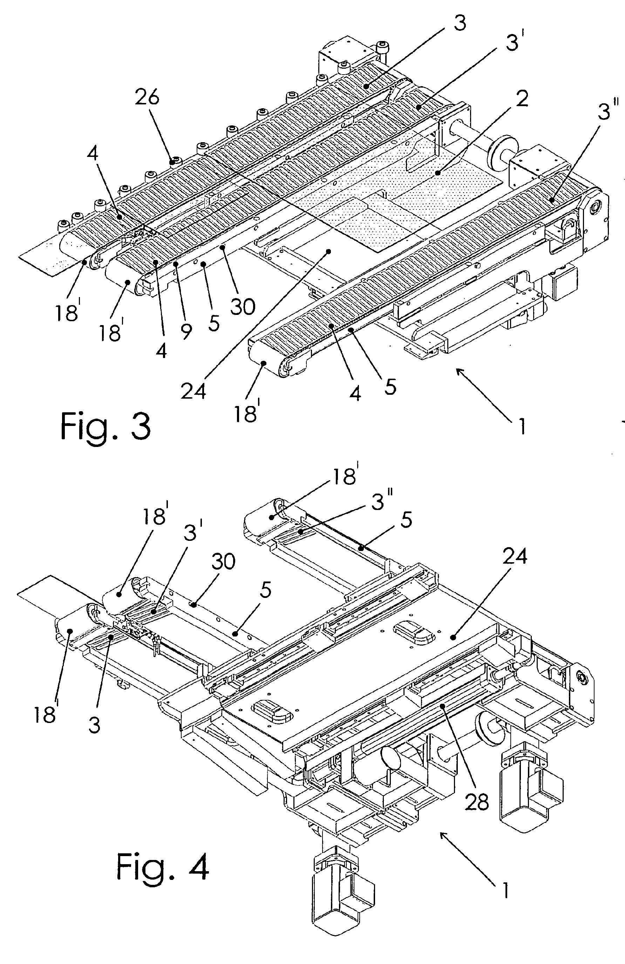

While Fig. 1 and 2 show the belts in an "open" position, namely with the belt 3' detached from the fixed belt 3, to realise an holding on plates 2 having big sizes, Fig. 3 and 4 show the belts in a "closed" position, namely with the belt 3' approaching the belt 3 for holding plates 2 having small sizes. Due to its configuration, it would even be possible to use a single belt 3 to obtain an efficient holding on many types of plates 2 having small sizes: it is however preferable to perform the holding with two belts 3 that engage respective ends of the plates 2 when they pass. As can be well seen in Fig. 1 and 3, it is obviously possible to also modify the distance between the two belts 3' and 3" by operating on the structure of the support 24.

Still more, Fig. 2 and 4 show the lower part of the support 24, where means 28 for moving the support 24 are better shown: such means are preferably composed of an electro-cylinder and/or suitable reducers.

With the constructive variation of the conveyor 1 shown in Fig. 1 to 4, a real conveyor system can thereby be realised for plates 2 having various sizes, such system being equipped with a plurality of conveyors 1 as described above, each one moving with a different speed with respect to the other ones. With this arrangement, by equipping a line, for example, having two series of transport rollers, with one, but preferably two pairs of conveyor systems, it is possible to simultaneously or disjointly work plates having different sizes and shapes that come into the working station from the two upstream series of rollers. Many other configurations of the inventive system and conveyor are obviously possible, due to the intrinsic flexibility with which its construction is equipped.

## Claims

1. Vacuum belt conveyor (1) for plates (2), particularly for glass plates (2), said conveyor (1), when the plates (2) are worked along any direction with respect to an advancement direction of the plates (2), exerting an holding force onto the plates (2) only on one of their major surfaces; said conveyor (1) substantially comprising: at least one belt (3) equipped with at least one suction recess (4) comprising at least one through-hole (4'); supporting means (5) of said at least one holed belt (3), said supporting means (5) comprising at least one vacuum chamber (7); and guiding means (9) of said at least one holed belt (3), said guiding means (9) being placed between said belt (3) and said supporting means (5) in order to close said at least one vacuum chamber (7), said guiding means (9) being equipped with at least one opening (11) adapted to externally open said at least one vacuum chamber (7) since it is placed next to said chamber (7) ;
**characterised in that** said conveyor (1) is equipped with a fixed belt (3) and a pair of belts (3', 3") placed on a support (24) that is movable with respect to said fixed belt (3) along a transverse direction with respect to the advancement direction of the plates (2), the distance between said fixed belt (3) and said two movable belts (3', 3") being variable in order to realise an optimum support and holding of plates (2) with any transverse size.

2. Vacuum belt conveyor (1) according to claim 1, **characterised in that** said guiding means (9) are made separately from said supporting means (5) and are joined thereto through securing means.

3. Vacuum belt conveyor (1) according to claim 1, **characterised in that** said guiding means (9) are made integrally with said supporting means (5).

4. Vacuum belt conveyor (1) according to claim 1, **characterised in that** said belt (3) is equipped with a plurality of suction recesses (4) with respective holes (4') that are obtained along its whole longitudinal extension.

5. Vacuum belt conveyor (1) according to claim 1 or 4, **characterised in that** said supporting means (5) are equipped with a plurality of vacuum chambers (7) and said guiding means (9) are equipped with a plurality of respective openings (11) each one corresponding to one of said vacuum chambers (7).

6. Vacuum belt conveyor (1) according to claim 1, **characterised in that** said belt (3) is equipped with a plurality of dragging teeth (14) adapted to engage respective dragging grooves (16) of toothed wheels (18) for moving the conveyor (1) around said wheels (18) and corresponding idle rollers (18').

7. Vacuum belt conveyor (1) according to claim 1, **characterised in that** said conveyor (1) is equipped with at least one wheel (20) around which said belts (3) rotate, said wheel (20) being equipped with a plurality of projecting pins (22) adapted to engage and penetrate into the respective holes (4') of said belt (3) in order to clean them and detach therefrom possible foreign substances contained therein.

8. Vacuum belt conveyor (1) according to claim 1, **characterised in that** said two movable belts (3', 3") are adapted to be simultaneously or alternatively activated to provide a higher or lower grip onto the plates (2).

9. Conveyor system for plates (2) having different sizes, **characterised in that** it is equipped with a plurality of conveyors (1) according to any one of the previous claims, each one of said conveyors (1) being adapted to move with a different speed from the other ones.

## Patentansprüche

1. Vakuumförderband (1) für Platten (2), besonders für Glasplatten (2). Dieses Förderband (1), das während der Bearbeitung der Platten (2) in eine beliebige Richtung gegenüber der Vorschubrichtung der Platten (2) eine Dichtkraft auf nur eine der größeren Oberflächen der Platten (2) ausübt, enthält grundlegend: mindestens ein Band (3), das mit mindestens einem Saugraum (4) ausgestattet ist und mindestens eine durchgehende Bohrung (4') enthält; Haltevorrichtungen (5), mindestens ein gelochtes Band (3), Haltevorrichtungen (5), die mindestens eine Vakuumkammer (7) enthalten; und Führungsvorrichtungen (9), mindestens ein durchlochtes Band (3). Diese Führungsvorrichtungen (9) sind zwischen dem Band (3) und den Haltevorrichtungen (5) so angebracht, dass sie mindestens eine Vakuumkammer (7) schließen. Diese Führungsvorrichtungen (9) sind mit mindestens einer Öffnung (11) ausgestattet, die dazu dient, von außen mindestens eine Vakuumkammer (7) zu öffnen, da sie sich in der Nähe dieser Kammer (7) befindet;
und ist **dadurch gekennzeichnet, dass** dieses Förderband (1) mit einem festen Band (3) und einem Bänderpaar (3', 3") ausgestattet ist, das auf einer Halterung (24) angebracht ist und gegenüber dem festen Band (3) quer zur Vorschubrichtung der Platten (2) beweglich ist. Der Abstand zwischen dem besagten festen Band (3) und den beiden beweglichen Bändern (3', 3") ist variabel, um eine optimale Halterung und Dichtheit der Platten (2) mit jeder beliebigen Querabmessung zu realisieren.

2. Vakuumförderband (1) gemäß Patentanspruch 1, das **dadurch gekennzeichnet ist, dass** die Führungsvorrichtungen (9) separat aus den Haltevorrichtungen (5) realisiert und mit ihnen durch Befestigungsvorrichtungen verbunden sind.

3. Vakuumförderband (1) gemäß Patentanspruch 1, das **dadurch gekennzeichnet ist, dass** diese Führungsvorrichtungen (9) vollständig mit den Haltevorrichtungen (5) realisiert sind.

4. Vakuumförderband (1) gemäß Patentanspruch 1, das **dadurch gekennzeichnet ist, dass** das Förderband (3) mit mehreren Saugräumen (4) mit den entsprechenden Löchern (4') ausgestattet ist, die entlang der gesamten Längsausdehnung angebracht sind.

5. Vakuumförderband (1) gemäß Patentanspruch 1 oder 4, das **dadurch gekennzeichnet ist, dass** die Haltevorrichtungen (5) mit mehreren Vakuumkammern (7) und die Führungsvorrichtungen (9) mit mehreren entsprechenden Öffnungen (11) ausgestattet sind, die jeweils einer Vakuumkammer (7) entsprechen.

6. Vakuumförderband (1) gemäß Patentanspruch 1, das **dadurch gekennzeichnet ist, dass** das Band (3) mit mehreren Mitnahmezähnen (14) ausgestattet ist, die für die Bewegung des Förderbandes (1) um die Räder (18) und die entsprechenden Losrollen (18') herum dazu dienen, in die entsprechenden Mitnahmehohlräume (16) mit den Zahnrädern (18) einzugreifen.

7. Vakuumförderband (1) gemäß Patentanspruch 1, das **dadurch gekennzeichnet ist, dass** das Förderband (1) mit mindestens einem Rad (20) ausgestattet ist, um das sich die Bänder (3) drehen. Das Rad (20) ist mit mehreren hervorstehenden Bolzen (22) ausgestattet, die dazu dienen, in die entsprechenden Löcher (4') des Förderbandes (3) einzugreifen und einzudringen, um eventuell auf ihnen vorhandene Fremdkörper zu reinigen und zu entfernen.

8. Vakuumförderband (1) gemäß Patentanspruch 1, das **dadurch gekennzeichnet ist, dass** beide beweglichen Bänder (3', 3") dazu dienen, gleichzeitig oder abwechselnd aktiviert zu werden, um einen größeren oder kleineren Eingriff auf die Platten (2) zu liefern.

9. Transportsystem für Platten (2) mit verschiedenen Abmessungen, das **dadurch gekennzeichnet ist, dass** es gemäß einem beliebigen der vorherigen Patentansprüche mit mehreren Förderbändern (1) ausgestattet ist. Jedes dieser Förderbänder (1) kann sich mit einer anderen Geschwindigkeit als die anderen bewegen.

## Revendications

1. Transporteur à bande sous vide (1) pour plaques (2), en particulier des plaques de verre (2), ledit transporteur (1), lors du traitement des plaques (2) dans n'importe quel sens par rapport au sens d'avancement des plaques (2), exerçant une force de tenue sur les plaques (2) uniquement sur une de leurs plus grandes surfaces; ledit transporteur (1) comprenant essentiellement : au moins une bande (3) pourvue d'au moins une cavité d'aspiration (4) comprenant au moins un trou passant (4'); des moyens de support (5) de ladite au moins une bande perforée (3), lesdits moyens de support (5) comprenant au moins une chambre de vide (7); et de moyens de guidage (9) de ladite au moins une bande perforée (3), lesdits moyens de guidage (9) étant placés entre ladite bande (3) et lesdits moyens de support (5) de manière à fermer ladite au moins une chambre de vide (7), lesdits moyens de guidage (9) étant pourvus d'au moins une ouverture (11) capable d'ouvrir à l'extérieur ladite au moins une chambre de vide (7) celle-ci étant placée en correspondance de ladite chambre (7);
**caractérisé en ce que** ce transporteur (1) est pourvu d'une bande fixe (3) et d'une paire de bandes (3', 3") placées sur un support (24) mobile par rapport à ladite bande fixe (3) le long d'un sens transversal par rapport au sens d'avancement des plaques (2), la distance entre ladite bande fixe (3) et lesdites deux bandes mobiles (3', 3") étant variable pour réaliser un support et une tenue optimale des plaques (2) de n'importe quelle dimension dans le sens transversal.

2. Transporteur à bande sous vide (1) selon la revendication 1, **caractérisé en ce que** lesdits moyens de guidage (9) sont réalisés séparément desdits moyens de support (5) et sont reliés à eux par des moyens de fixation.

3. Transporteur à bande sous vide (1) selon la revendication 1, **caractérisé en ce que** lesdits moyens de guidage (9) sont réalisés en mode intégral avec lesdits moyens de support (5).

4. Transporteur à bande sous vide (1) selon la revendication 1, **caractérisé en ce que** ladite bande (3) est muni d'une pluralité de cavités d'aspiration (4) avec les trous respectifs (4') pratiqués sur toute son extension longitudinale.

5. Transporteur à bande sous vide (1) selon la revendication 1 ou 4, **caractérisé en ce que** lesdits moyens de support (5) sont pourvus d'une pluralité de chambres de vide (7) et lesdits moyens de guidage (9) sont pourvus d'une pluralité d'ouvertures respectives (11) chacune correspondant à une des chambres de vide (7).

6. Transporteur à bande sous vide (1) selon la revendication 1, **caractérisé en ce que** ladite bande (3) est munie d'une pluralité de dents d'entraînement (14) capables d'engager des respectives gorges d'entraînement (16) de roues dentées (18) pour le mouvement du transporteur (1) autour desdites roues (18) et de roues libres (18') correspondantes.

7. Transporteur à bande sous vide (1) selon la revendication 1, **caractérisé en ce que** ledit transporteur (1) est pourvu d'au moins une roue (20) autour de laquelle tournent lesdites bandes (3), cette roue (20) étant pourvue d'une pluralité d'axes saillants (22) capables d'engrener et de pénétrer dans les respectifs orifices (4') de cette bande (3) pour les nettoyer et détacher les éventuelles substances étrangères collées.

8. Transporteur à bande sous vide (1) selon la revendication 1, **caractérisé en ce que** lesdites bandes mobiles (3', 3") sont capables d'être activées simultanément ou alternativement pour fournir une tenue plus ou moins importante sur les plaques (2).

9. Système transporteur pour plaques (2) avec différentes dimensions, **caractérisé en ce qu'**il est muni d'une pluralité de transporteurs (1) selon une quelconque des revendications précédentes, chacun desdits transporteurs (1) étant capable de se déplacer avec une vitesse différente par rapport aux autres.
